# EUROPÄISCHE PATENTSCHRIFT

(11) **EP 2 602 895 B1**
(45) Veröffentlichungstag und Bekanntmachung des Hinweises auf die Patenterteilung: **09.01.2019**
(21) Anmeldenummer: 12194387.2
(22) Anmeldetag: 27.11.2012
(51) Int. Cl.: H02M 7/00, H02M 7/06, H02J 5/00

(54) **Schaltungsanordnung für ein Haushaltsgerät und Haushaltsgerät mit einer Schaltungsanordnung**
Circuit arrangement for a household appliance and household appliance with a circuit arrangement
Circuit pour un appareil ménager et appareil ménager doté d'un tel circuit

(30) Priorität: 06.12.2011 DE 102011087808
(43) Veröffentlichungstag der Anmeldung: 12.06.2013
(73) Patentinhaber: BSH Hausgeräte GmbH, 81739 München (DE)
(72) Erfinder: Plankl, Manfred, 83374 Traunwalchen (DE)

(56) Entgegenhaltungen:
- WO-A1-2009/071413
- DE-A1- 10 107 469

## Beschreibung

Die Erfindung betrifft eine Schaltungsanordnung für ein Haushaltsgerät, welche einen Schaltungseingang mit einem ersten und einem zweiten Wechselspannungsanschluss aufweist, zwischen denen eine elektrische Wechselspannung - etwa eine Netzspannung - angelegt werden kann. Die Schaltungsanordnung beinhaltet auch eine mit dem ersten und dem zweiten Wechselspannungsanschluss gekoppelte Gleichspannungserzeugungseinheit, die an dem Schaltungseingang die elektrische Wechselspannung abgreift und dazu ausgebildet ist, aus dieser Wechselspannung eine elektrische Gleichspannung bereitzustellen, mit welcher eine Elektronikeinheit des Haushaltsgeräts - etwa eine Steuereinrichtung - versorgt wird. Diese Gleichspannung wird zwischen einem Gleichspannungsanschluss und einem Bezugspotential bereitgestellt. Zur Schaltungsanordnung gehört auch ein Schutzleiter. Dabei ist das Bezugspotential der Elektronikeinheit mit dem Schutzleiter gekoppelt. Die Erfindung betrifft auch ein Haushaltsgerät mit einer derartigen Schaltungsanordnung.

Es ist Stand der Technik, das Bezugspotential einer Elektronikeinheit eines Haushaltsgeräts mit dem so genannten Schutzleiter (PE) zu koppeln. So offenbart beispielsweise die WO 2009 071 413A1 eine Schaltungsanordnung zum Betreiben eines Haushaltsgeräts mit einem Schaltnetzteil und mit einer mehrere Entstörkondensatoren aufweisenden elektrischen Filtereinheit, welche primärseitig des Schaltnetzteils angeordnet ist.

Ferner offenbart die DE 101 07 469 A1 eine Netzfreischaltungsvorrichtung mit einem Lastkreis, welcher mit einem Versorgungsnetz verbindbar ist, und einem permanent an das Versorgungsnetz angeschlossenen Hilfskreis, bei welchem eine Minusleitung des Hilfskreises über einen Widerstand und einen Kondensator an einen Schutzkontakt angeschlossen ist.

Im Stand der Technik wird das Bezugspotential der Elektronikeinheit mit dem Schutzleiter üblicherweise direkt verbunden, etwa mithilfe einer Kurzschlussleitung. Die Verbindung des Bezugspotentials mit dem Schutzleiter hat dabei eine Schutzfunktion: Wäre die Elektronikeinheit nicht mit dem Schutzleiter verbunden, könnte sich bereits im Normalbetrieb eine undefinierte Spannung zwischen dem Bezugspotential einerseits und dem Schutzleiter - also auch dem Gerätegehäuse - andererseits aufbauen. Diese elektrische Spannung würde aufgrund von Leckströmen und parasitären Kapazitäten zwischen den Netzanschlüssen einerseits und der Elektronikeinheit andererseits entstehen und sich aus der Aufladung des parasitären Kondensators zwischen der Elektronikeinheit und dem Gerätegehäuse ergeben.

Diese elektrische Spannung kann sich durch Spannungsspitzen im Stromnetz oder aber bei der Hochspannungsprüfung weiter aufbauen. Zwar ist diese Spannung ungefährlich und unkritisch, weil sie bei Belastung sofort zusammenbricht. Baut sich diese Spannung jedoch zwischen der Elektronikeinheit und dem Gerätegehäuse weiter auf, führt sie irgendwann zu einem undefinierten Überschlag am schwächsten Punkt zwischen der Elektronikeinheit und dem Gerätegehäuse, und die parasitäre Kapazität wird schlagartig entladen. An der Entladestelle fließen dann kurzzeitig Entladeströme mit einer relativ großen Stromstärke, welche zu einer Zerstörung von elektronischen Bauteilen führen können, nämlich insbesondere von Sensoren und dergleichen.

Um dies zu vermeiden, wird also eine elektrische Verbindung zwischen dem Bezugspotential der Elektroeinheit und dem Schutzleiter realisiert, sodass die Spannung zwischen der Elektronikeinheit einerseits und dem Gerätegehäuse andererseits die Amplitude der Gleichspannung nicht überschreiten kann, mit welcher die Elektronikeinheit versorgt wird. Eventuell vorhandene Leckströme werden sofort gegen das Gerätegehäuse abgeleitet, und die Isolation zwischen der Elektronikeinheit und dem Gerätegehäuse muss lediglich für diese Kleinspannung ausgelegt sein. Dies ist speziell bei beengten Platzverhältnissen im Bereich von Displays oder aber bei schwierig zu isolierenden Bereichen von großem Vorteil, wie etwa dem Hochtemperaturbereich eines Backofenfühlers.

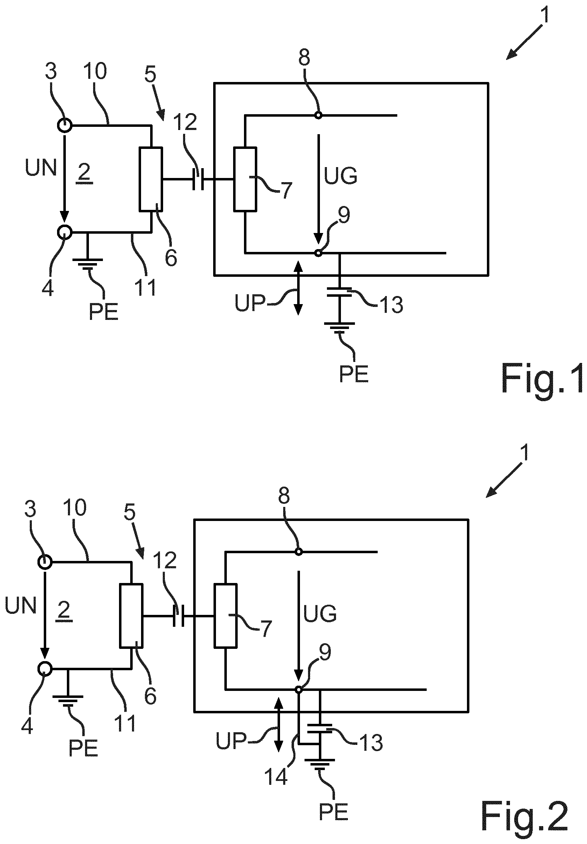

Die Problematik der parasitären Kapazitäten wird nun mit Bezug auf die Figuren 1 und 2 näher erläutert: In Fig. 1 ist eine Schaltungsanordnung 1 dargestellt, welche einen Schaltungseingang 2 aufweist, der einen erste und einen zweiten Wechselspannungsanschluss 3, 4 besitzt. Die Schaltungsanordnung 1 weist auch einen Schutzleiter PE auf. Zwischen den Wechselspannungsanschlüssen 3, 4 kann eine Wechselspannung UN angelegt werden, welche beispielsweise eine Netzspannung oder aber eine daraus abgeleitete Wechselspannung sein kann. Mit dem Schaltungseingang 2 ist eine Gleichspannungserzeugungseinheit 5 mit einem Transformator bestehend aus einer ersten Spule 6 und einer zweiten Spule 7 verbunden. Die Gleichspannungserzeugungseinheit 5 stellt aus der Wechselspannung UN eine Gleichspannung UG bereit, und zwar zwischen einem Gleichspannungsanschluss 8 und einem Bezugspotential 9. Mit der Gleichspannung UG wird eine Elektronikeinheit des Haushaltsgeräts versorgt, nämlich beispielsweise ein Mikrocontroller und/oder ein digitaler Signalprozessor und dergleichen. Der erste Wechselspannungsanschluss 3 ist beispielsweise mit einem Phasenleiter 10 verbunden, und der zweite Wechselspannungsanschluss 4 ist mit einem Nullleiter 11 verbunden, welcher wiederum mit dem Schutzleiter PE gekoppelt ist. In dem in Fig. 1 dargestellten Beispiel ist die Gleichspannungserzeugungseinheit 5 beispielsweise ein Schaltnetzteil. Wie in Fig. 1 schematisch angedeutet ist, entsteht zwischen den beiden Spulen 6, 7 eine parasitäre Kapazität 12; auch zwischen dem Bezugspotential 9 einerseits und dem Schutzleiter PE bzw. dem Gerätegehäuse andererseits baut sich eine parasitäre Kapazität 13 auf. Es baut sich somit eine Spannung UP zwischen dem Bezugspotential 9 und dem Schutzleiter PE auf, welche irgendwann zu einem undefinierten Überschlag am schwächsten Punkt zwischen der Elektronikeinheit und dem Gerätegehäuse führt, sodass die parasitäre Kapazität 13 schlagartig entladen wird. Es fließen dann kurzzeitig Ströme mit einer großen Stromstärke, und diese Ströme können zu einer Zerstörung von elektronischen Bauteilen führen. Um dies zu vermeiden, wird im Stand der Technik das Bezugspotential 9 über eine elektrische Leistung 14 mit dem Schutzleiter PE verbunden, wie dies in Fig. 2 schematisch dargestellt ist.

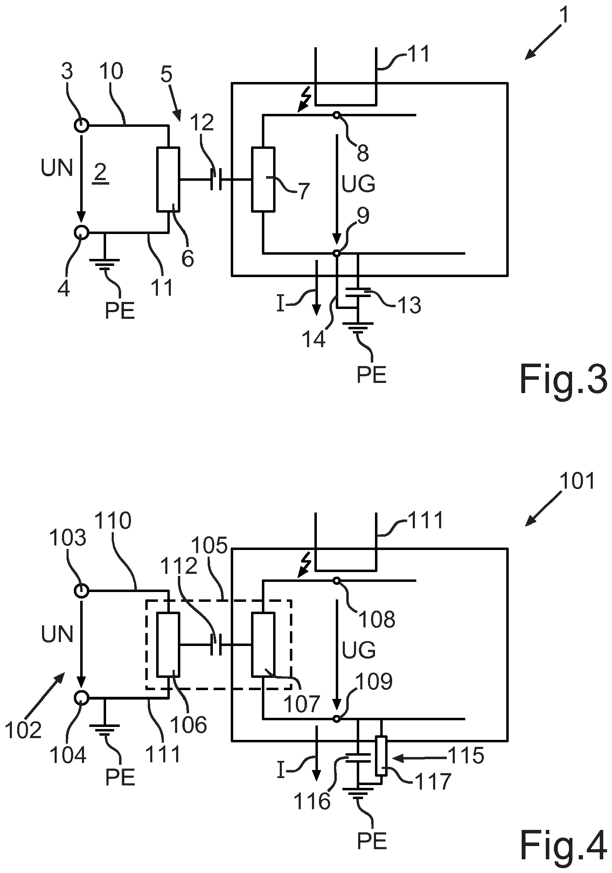

Auf der anderen Seite werden Haushalte zunehmend mit so genannten Fehlerstromschutzschaltern (FI-Schalter) ausgerüstet, welche im Falle eines Isolationsfehlers die elektrischen Geräte abschalten sollen. Es hat sich nun herausgestellt, dass die Funktionsfähigkeit von solchen FI-Schaltern unter gewissen Umständen durch Gleichströme negativ beeinflusst werden kann. Dies ist nämlich dann der Fall, wenn der Gesamtfehlerstrom keinen Nulldurchgang mehr aufweist oder aber wenn der reine Fehlergleichstrom (Gleichstromfehlerstrom) einen bestimmten, kritischen Grenzwert überschreitet. Dieser Grenzwert liegt in der Regel bei etwa 5 mA. Kommt jetzt zu einem Versagen der Isolation zwischen dem Nulleiter 11 und dem Gleichspannungsanschluss 8, wie dies schematisch und in abstrakter Darstellung in Fig. 3 gezeigt ist, so kann dies - insbesondere bei Systemen, in denen die Elektronikeinheit mit dem Schutzleiter PE verbunden ist - Ableitströme hervorrufen, welche Gleichströme sind. Durch Überschlag zwischen Nullleiter 11 und der Gleichspannung UG der Elektronikeinheit entstehen also Gleichstromableitströme I. Demgegenüber führt ein Versagen der Isolation zwischen dem Phasenleiter 10 und der Elektronikeinheit im Normalfall zu im Wesentlichen wechselstromförmigen Ableitströmen. Potentielle Gefahrenstellen sind dabei vor allem Relais und andere Stellen, bei denen die Wechselspannungsanschlüsse 3, 4 bzw. der Nullleiter 11 und der Phasenleiter 10 einerseits und die Elektronikeinheit andererseits relativ nah aneinander angeordnet sind.

Die Situation wird auch dadurch erschwert, dass bei Steckergeräten, welche über einen normalen Netzstecker verfügen, nicht zwischen Phasenleiter und Nullleiter unterschieden wird. Im Hinblick auf die Isolation müssen somit beide Wechselspannungsanschlüsse 3, 4 betrachtet werden.

Bei einem Versagen der Isolation zwischen dem Nullleiter 11 und der Elektronikeinheit fließen also Ableitströme I durch den Nullleiter 11, wie dies schematisch in Fig. 3 dargestellt ist. Weil diese Ableitströme Gleichströme sind, kann die Funktionsweise des FI-Schalters negativ beeinflusst werden, wenn die Stromstärke den genannten Grenzwert überschreitet. Die übliche Lösung dieses Problems besteht in der Verwendung von Relais, welche zwischen der Magnetspule und dem Kontaktelement anstelle von der üblicherweise ausreichenden Basisisolation eine verstärkte Isolation aufweisen. Diese Lösung ist jedoch auch mit einigen Nachteilen verbunden: Einerseits beanspruchen solche Bauelemente relativ viel Bauraum; andererseits sind sie auch relativ teuer. Eine besondere Herausforderung besteht somit darin, im Falle eines Isolationsfehlers gleichstromförmige Ableitströme in für den FI-Schalter kritischen Größen zu vermeiden und gleichzeitig die Vorteile der geerdeten Elektronik beizubehalten, nämlich beispielsweise die Möglichkeit des Einsatzes eines kapazitiven Schalters.

Es ist Aufgabe der Erfindung, eine Lösung aufzuzeigen, wie bei einer Schaltungsanordnung der eingangs genannten Gattung, bei welcher das Bezugspotential der Elektronikeinheit mit dem Schutzleiter gekoppelt ist, die ordnungsgemäße Funktionsweise eines FI-Schalters ohne viel Aufwand gewährleistet werden kann.

Diese Aufgabe wird erfindungsgemäß durch eine Schaltungsanordnung sowie durch ein Haushaltsgerät mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Schaltungsanordnung für ein Haushaltsgerät weist einen Schaltungseingang mit einem ersten und einem zweiten Wechselspannungsanschluss auf, zwischen denen eine elektrische Wechselspannung angelegt werden kann. Es ist eine mit dem ersten und dem zweiten Wechselspannungsanschluss gekoppelte Gleichspannungserzeugungseinheit bereitgestellt, welche an dem Schaltungseingang die elektrische Wechselspannung abgreift und aus der Wechselspannung eine elektrische Gleichspannung für eine Elektronikeinheit des Haushaltsgeräts zwischen einem Gleichspannungsanschluss und einem Bezugspotential bereitstellt. Die Schaltungsanordnung weist einen Kondensator auf, über welchen das Bezugspotential mit einem Schutzleiter gekoppelt ist.

Der erfindungsgemäße Effekt wird also dadurch erzielt, dass die Kopplung bzw. die Verbindung zwischen dem Bezugspotential der Elektronikeinheit einerseits und dem Schutzleiter andererseits über ein konkretes elektronisches Bauelement realisiert ist, nämlich über einen Kondensator. Hierdurch wird erreicht, dass aus diesem Kondensator sowie aus der parasitären Kapazität (12 in den Figuren 1 bis 3) ein kapazitiver Spannungsteiler gebildet wird. Bei entsprechender Dimensionierung des Kondensators sorgt der Spannungsteiler dafür, dass ein Großteil der elektrischen Spannung an der parasitären Kapazität anfällt und sich zwischen der Elektronikeinheit und dem Schutzleiter somit nur noch eine sehr geringe Spannung aufbauen kann. Mit geringem technischen Aufwand kann somit die ordnungsgemäße Funktionsweise eines FI-Schalters gewährleistet werden, und die Schaltungsanordnung kann platzsparend und kostenreduziert realisiert werden. Außerdem wird durch die Verwendung eines Kondensators die Verbindung zwischen dem Bezugspotential und dem Schutzleiter für höhere Frequenzen so niederohmig, dass in dem Haushaltsgerät eingesetzte kapazitive Schalter (Berührungssensoren oder Funksysteme) in ihrer Funktionsweise nicht beeinträchtigt werden.

Das Haushaltsgerät kann ein Gerät zur Zubereitung von Lebensmitteln, insbesondere ein Backofen oder ein Kochfeld, oder ein Gerät zur Pflege von Wäschestücken, etwa eine Waschmaschine, ein Wäschetrockner oder ein Waschtrockner, oder aber eine Geschirrspülmaschine sein. Es kann aber auch ein Haushaltskleingerät sein, wie beispielsweise ein Kaffeevollautomat oder aber eine Küchenmaschine.

Es erweist als besonders vorteilhaft, wenn der Kondensator derart dimensioniert ist, dass seine Kapazität größer als die parasitäre Kapazität zwischen einer Eingangsseite (Spule 6 in den Figuren 1 bis 3) und einer Ausgangsseite (Spule 7) der Gleichspannungserzeugungseinheit ist. Dann ist sichergestellt, dass ein größerer Anteil der elektrischen Spannung an dieser parasitären Kapazität abfällt, während an dem Kondensator lediglich eine geringere Spannung abfallen kann.

Bevorzugt ist ein Verhältnis der Kapazität des Kondensators zu der parasitären Kapazität größer als 10, insbesondere größer als 20. Dieses Verhältnis kann beispielsweise in einem Wertebereich von 20 bis 40 liegen. Gerade dann ist die Amplitude der an der parasitären Kapazität (12 in den Figuren 1 bis 3) abfallenden Spannung auch entsprechend größer als die Amplitude der Spannung am Kondensator.

Die Kapazität des Kondensators liegt in einem Wertebereich von 10 nF bis 500 nF, insbesondere von 50 nF bis 200 nF. Einerseits wird somit die Funktionsweise von kapazitiven Schaltern nicht negativ beeinflusst; andererseits wird somit der FI-Schalter in seiner Funktionstüchtigkeit nicht beeinträchtigt.

Ein Widerstand ist parallel zu dem Kondensator geschaltet. Durch Einsatz eines solchen elektronischen Bauelements wird verhindert, dass sich der Kondensator mit Gleichspannung aufladen kann. Die Amplitude der am Kondensator anliegenden Spannung wird somit auf ein Minimum reduziert.

Es ist vorgesehen, dass der Widerstand einen solchen Widerstandswert aufweist, bei welchem die Stromstärke eines durch den Widerstand fließenden Stromes - unter Berücksichtigung der Amplitude der Gleichspannung zwischen dem Gleichspannungsanschluss und dem Bezugspotential - kleiner als ein vorbestimmter Grenzwert ist. Dieser Grenzwert liegt insbesondere in einem Wertebereich von 3 mA bis 7 mA und beträgt beispielsweise 5 mA oder 6 mA. Somit ist der Widerstand so groß dimensioniert, dass bei der maximal auftretenden Gleichspannung in der Elektronikeinheit keine für den FI-Schalter schädlichen Gleichströme fließen können. Beispielsweise bei einer Gleichspannung der Elektronikeinheit von 24 V und einem maximal zulässigen Gleichstromfehlerstrom von 5 mA wird der Widerstand mit mindestens 5 kΩ verwendet.

Für viele Baugruppen ergibt sich somit eine Parallelschaltung aus einem Kondensator mit einer Kapazität von 100 nF sowie einem Widerstand mit einem Widerstandswert von 10 kΩ. Der Widerstand weist also - allgemein gesagt - einen Widerstandswert auf, der in einem Wertebereich von 1 kΩ bis 15 kΩ liegt. Abhängig von der Amplitude der Gleichspannung zwischen dem Gleichspannungsanschluss und dem Bezugspotential kann somit stets erreicht werden, dass die Stromstärke des durch den Widerstand fließenden Stromes den vorgegebenen Grenzwert nicht überschreitet.

Ein erfindungsgemäßes Haushaltsgerät umfasst eine erfindungsgemäße Schaltungsanordnung. Die mit Bezug auf die erfindungsgemäße Schaltungsanordnung vorgestellten bevorzugten Ausführungsformen und deren Vorteile gelten entsprechend für das erfindungsgemäße Haushaltsgerät.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Es zeigen:
- Fig. 1 bis 3: in schematischer Darstellung Schaltungsanordnungen gemäß dem Stand der Technik; und
- Fig. 4: in schematischer und abstrakter Darstellung eine Schaltungsanordnung gemäß einer Ausführungsform der Erfindung.

Eine in Fig. 4 dargestellte Schaltungsanordnung 101 gemäß einer Ausführungsform der Erfindung weist einen Schaltungseingang 102 auf, welcher einen ersten Wechselspannungsanschluss 103 sowie einen zweiten Wechselspannungsanschluss 104 aufweist. Zwischen den Wechselspannungsanschlüssen 103, 104 kann eine elektrische Wechselspannung UN angelegt werden, die eine Netzspannung oder aber eine daraus abgeleitete Wechselspannung ist. Der erste Wechselspannungsanschluss 103 ist beispielsweise mit einem Phasenleiter 110 verbunden, während der zweite Wechselspannungsanschluss 104 mit einem Nullleiter 111 (auch unter der Bezeichnung "Neutralleiter" bekannt) verbunden ist. Außerdem ist ein Schutzleiter PE bereitgestellt.

Mit dem Schaltungseingang 102 ist eine Gleichspannungserzeugungseinheit 105 gekoppelt, welche im Ausführungsbeispiel ein Schaltnetzteil mit einem Transformator ist. Die Gleichspannungserzeugungseinheit 105 weist eingangsseitig eine Primärspule 106 und ausgangsseitig eine Sekundärspule 107 auf. Die Spulen 106, 107 sind Bestandteile des Transformators, welcher zum Erzeugen einer Gleichspannung UG dient, nämlich aus der Wechselspannung UN. Die Gleichspannung UG wird zwischen einem Gleichspannungsanschluss 108 einerseits und einem Bezugspotential 109 andererseits erzeugt. Unter einer Gleichspannung wird hier zumindest eine gleichgerichtete und gegebenenfalls auch mit Hilfe eines Kondensators geglättete Spannung verstanden.

Mit der Gleichspannung UG wird eine Elektronikeinheit (nicht dargestellt) versorgt, die beispielsweise eine Steuereinheit des Haushaltsgeräts beinhalten kann. Diese kann wiederum einen Mikrocontroller und/oder einen digitalen Signalprozessor und/oder einen Speicher beinhalten.

Die Ausgangsseite (Sekundärspule 107) ist von der Eingangsseite (Primärspule 106) im Ausführungsbeispiel galvanisch getrennt bzw. isoliert. Somit ist auch das Bezugspotential 109 bzw. der Gleichspannungsanschluss 108 galvanisch von dem Nullleiter 111 und dem Phasenleiter 110 getrennt.

Um zu vermeiden, dass sich einerseits eine zu große Spannung zwischen dem Bezugspotential 109 und dem Schutzleiter PE (Gerätegehäuse) aufbaut und andererseits auch keine zu großen Ableitströme I zwischen dem Nullleiter 111 und der Elektronikeinheit fließen, weist die Schaltungsanordnung 101 eine Parallelschaltung 115 aus einem Kondensator 116 und einem parallel dazu geschalteten Widerstand 117 auf. Über die Parallelschaltung 115 ist das Bezugspotential 109 mit dem Schutzleiter PE gekoppelt. Dies bedeutet, dass das Bezugspotential 109 über den Kondensator 116 sowie parallel dazu auch über den Widerstand 117 mit dem Schutzleiter PE elektrisch verbunden ist.

Die Größe der Kapazität des Kondensators 116 wird in Abhängigkeit von einer parasitären Kapazität 112 zwischen den beiden Spulen 106, 107 (also zwischen Netzanschluss und Elektronik) bestimmt und sollte ungefähr 20 bis 40 Mal so groß sein wie die parasitäre Kapazität 112. Daraus ergibt sich ein kapazitiver Spannungsteiler, welcher aus dem Kondensator 116 einerseits und der parasitären Kapazität 112 andererseits besteht und dafür sorgt, dass der größte Anteil der Spannung an der parasitären Kapazität 112 abfällt und sich zwischen der Elektronikeinheit und dem Schutzleiter PE nur noch eine geringe Spannung aufbauen kann. Um das Aufladen des Kondensators 116 mit Gleichspannung zu vermeiden, wird der genannte Widerstand 117 parallel zum Kondensator 116 eingesetzt. Dieser Widerstand 117 wird mindestens so groß gewählt, dass bei der maximal auftretenden Gleichspannung UG in der Elektronikeinheit keine für den FI-Schalter schädlichen Gleichströme I fließen können. Bei einer Gleichspannung UG von beispielsweise 24 V und einem zulässigen Fehlergleichstrom von etwa 5 mA kann der Widerstand 117 einen Widerstandswert von etwa 5 kΩ aufweisen.

Durch Einsatz der Parallelschaltung 115 wird einerseits erreicht, dass sich zwischen der Elektronikeinheit und dem Schutzleiter PE keine zu große Gleichspannung aufbauen kann, die dann schlagartig abgebaut werden und somit bestimmte Komponenten des Haushaltsgeräts beschädigen könnte. Auf der anderen Seite wird auch verhindert, dass zwischen dem Nullleiter 111 und der Elektronikeinheit keine Gleichströme fließen können, welche die Funktionsfähigkeit des FI-Schalters beeinträchtigen könnten. Die Stromstärke des Stromes I ist nämlich so gering, dass die Funktionsweise des FI-Schalters nicht negativ beeinfusst wird. Der Vorteil der Erfindung liegt somit darin, dass vorhandene Konzepte ohne größere Mehrkosten weiter verwendet werden können. Speziell bei Systemen mit einer Vielzahl von Relais sind die Kosten durch die zusätzlichen Bauteile wesentlich geringer als die für verbesserte Relais mit einer verstärkten Isolation zwischen Spule und Kontaktelement anfallenden Kosten. Durch die Verwendung des Kondensators 116 wird die Parallelschaltung 115 auch für höhere Frequenzen derart niederohmig, dass bestehende Berührungs- und Funksysteme weiterhin ordnungsgemäß funktionieren.

Aus Sicherheitsgründen kann die Parallelschaltung 115 auch aus Reihen- und Parallelschaltungen von mehreren Kondensatoren und Widerständen bestehen.

### Bezugszeichenliste

- 1: Schaltungsanordnung
- 2: Schaltungseingang
- 3,4: Wechselspannungsanschluss
- 5: Gleichspannungserzeugungseinheit
- 6,7: Spulen
- 8: Gleichspannungsanschluss
- 9: Bezugspotential
- 10: Phasenleiter
- 11: Nullleiter
- 12, 13: parasitäre Kapazität
- 14: elektrische Leistung
- 101: Schaltungsanordnung
- 102: Schaltungseingang
- 103, 104: Wechselspannungsanschlüsse
- 105: Gleichspannungserzeugungseinheit
- 106, 107: Primärspule, Sekundärspule
- 108: Gleichspannungsanschluss
- 109: Bezugspotential
- 110: Phasenleiter
- 111: Nullleiter
- 112: parasitäre Kapazität
- 115: Parallelschaltung
- 116: Kondensator
- 117: Widerstand
- PE: Schutzleiter
- UG: Gleichspannung
- UN: Wechselspannung
- UP: Spannung
- I: Ableitströme

## Patentansprüche

1. Schaltungsanordnung (101)für ein Haushaltsgerät, mit:
- einem Schaltungseingang (102) mit einem ersten und einem zweiten Wechselspannungsanschluss (103, 104), zwischen denen eine elektrische Wechselspannung (UN) anlegbar ist,
- einer mit dem ersten und dem zweiten Wechselspannungsanschluss (103, 104) gekoppelten Gleichspannungserzeugungseinheit (105), welche an dem Schaltungseingang (102) die elektrische Wechselspannung (UN) abgreift und dazu ausgelegt ist, aus der Wechselspannung (UN) eine elektrische Gleichspannung (UG) für eine Elektronikeinheit des Haushaltsgeräts zwischen einem Gleichspannungsanschluss (108) und einem Bezugspotential (109) bereitzustellen, und
- einem Schutzleiter (PE), wobei das Bezugspotential (109) mit dem Schutzleiter (PE) gekoppelt ist,
**dadurch gekennzeichnet, dass**
die Schaltungsanordnung (101) einen Kondensator (116) mit einer Kapazität aus einem Wertebereich von 10 nF bis 500 nF, insbesondere von 50 nF bis 200 nF, aufweist, über welchen das Bezugspotential (109) mit dem Schutzleiter (PE) gekoppelt ist und dass ein Widerstand (117) parallel zu dem Kondensator (116) geschaltet ist, wobei der Widerstand (117) einen solchen Widerstandswert aufweist, bei welchem die Stromstärke eines durch den Widerstand (117) fließenden Stromes (I) kleiner als ein vorbestimmter Grenzwert ist, welcher in einem Wertebereich von 3 mA bis 7 mA liegt, insbesondere 5 mA beträgt, wobei der Widerstand (117) einen Widerstandswert aus einem Wertebereich von 1 kOhm bis 15 kOhm aufweist.

2. Haushaltsgerät mit einer Schaltungsanordnung (101) nach Anspruch 1.

## Claims

1. Circuit arrangement (101) for a household appliance, having:
- a circuit input (102) with a first and a second alternating voltage terminal (103, 104), between which an electrical alternating voltage (UN) can be applied,
- a direct voltage generating unit (105) which is coupled to the first and the second alternating voltage terminal (103, 104) and which picks up the electrical alternating voltage (UN) at the circuit input (102), and is designed to provide, from the alternating voltage (UN), an electrical direct voltage (UG) for an electronics unit of the household appliance between a direct voltage terminal (108) and a reference potential (109), and
- a protective earth (PE), whereby the reference potential (109) is coupled to the protective earth (PE),
**characterised in that**
the circuit arrangement (101) has a capacitor (116) with a capacity in a range of values from 10 nF to 500 nF, in particular from 50 nF to 200 nF, via which the reference potential (109) is coupled to the protective earth (PE), and **in that** a resistor (117) is connected parallel to the capacitor (116), wherein the resistor (117) has a resistance value such that the current strength of a current (I) flowing through the resistor (117) is smaller than a predetermined limit value, which lies in a range of values from 3 mA to 7 mA, in particular is 5 mA, wherein the resistor (117) has a resistance value in a range of values from 1 kilohm to 15 kilohms.

2. Household appliance having a circuit arrangement (101) according to claim 1.

## Revendications

1. Circuit (101) pour un appareil ménager, avec :
- une entrée de circuit (102) avec une première et une deuxième borne de tension alternative (103, 104) entre lesquelles une tension électrique alternative (UN) peut être appliquée,
- une unité de génération de tension continue (105) couplée à la première et la deuxième borne de tension alternative (103, 104), laquelle prélève la tension électrique alternative (UN) à l'entrée de circuit (102) et est dimensionnée afin de mettre à disposition, au départ de la tension alternative (UN), une tension électrique continue (UG) pour une unité électronique de l'appareil ménager entre une borne de tension continue (108) et un potentiel de référence (109), et
- un conducteur de protection (PE), dans lequel le potentiel de référence (109) est couplé au conducteur de protection (PE),
**caractérisé en ce que**
le circuit (101) présente un condensateur (116) avec une capacité issue d'une plage de valeurs de 10 nF à 500 nF, en particulier de 50 nF à 200 nF, via lequel le potentiel de référence (109) est couplé au conducteur de protection (PE) et **en ce qu'**une résistance (117) est raccordée en parallèle au condensateur (116), dans lequel la résistance (117) présente une valeur de résistance telle que l'intensité de courant d'un courant (I) s'écoulant à travers la résistance (117) est inférieure à une valeur limite préalablement déterminée se trouvant dans une plage de valeurs de 3 mA à 7 mA, en particulier de 5 mA, dans lequel la résistance (117) présente une valeur de résistance issue d'une plage de valeurs de 1 kOhm à 15 kOhm.

2. Appareil ménager avec un circuit (101) selon la revendication 1.
